# EUROPÄISCHE PATENTSCHRIFT

(11) **EP 3 687 737 B1**
(45) Veröffentlichungstag und Bekanntmachung des Hinweises auf die Patenterteilung: **10.11.2021**
(21) Anmeldenummer: 18773163.3
(22) Anmeldetag: 19.09.2018
(51) Int. Cl.: B25B 27/10, B21D 39/04

(54) **PRESSWERKZEUG ZUM VERPRESSEN VON FITTINGS ZUR HERSTELLUNG VON ROHRVERBINDUNGEN**
PRESSING TOOL FOR PRESSING FITTINGS FOR PRODUCING PIPE CONNECTIONS
OUTIL DE PRESSE POUR LA COMPRESSION DE RACCORDS PERMETTANT LA FABRICATION DE RACCORDEMENTS DE TUBES

(30) Priorität: 29.09.2017 DE 102017122757
(43) Veröffentlichungstag der Anmeldung: 05.08.2020
(73) Patentinhaber: Viega Technology GmbH & Co. KG, 57439 Attendorn (DE)
(72) Erfinder: SCHNEIDER, Andreas, 57413 Finnentrop-Schönholthausen (DE); KRAMER, Dominik, 57439 Attendorn (DE); SCHMITT, David, 57439 Attendorn (DE); ROSENTHAL, Jörg, 51580 Reichshof-Eckenhagen (DE); FAULSTICH, Markus, 65479 Raunheim (DE); RIILI, Nadine, 57368 Lennestadt (DE); SCHMITT, Detlev, 57489 Drolshagen (DE); GRÜNKEMEIER, Uwe, 41564 Kaarst (DE); STAHLSCHMIDT, Matthias, 58840 Plettenberg (DE)
(74) Vertreter: Cohausz & Florack
(86) Internationale Anmeldenummer: PCT/EP2018/075274
(87) Internationale Veröffentlichungsnummer: WO 2019/063369

(56) Entgegenhaltungen:
- EP-A1- 0 791 433
- US-A- 57 447
- US-A1- 2012 246 902

## Beschreibung

Die Erfindung betrifft ein Presswerkzeug zum Verpressen von Fittings zur Herstellung von Rohrverbindungen mit zwei gegenüberliegenden Pressbacken, die jeweils einen Pressabschnitt und einen Hebelabschnitt aufweisen und mit einem Halteelement zum verschwenkbaren Verbinden der Pressbacken, wobei die Pressabschnitte einen Aufnahmebereich ausbilden und wobei ein Auseinanderdrücken der Hebelabschnitte ein Schließen des Aufnahmebereichs bewirkt. Die Erfindung betrifft weiterhin ein Verfahren zum Verpressen von Fittings zur Herstellung von Rohrverbindungen.

Der für die vorliegende Erfindung relevante technische Bereich ist die baustellenseitige Installation von Rohrleitungssystemen, bei der allgemein für das Leiten und Führen eines Fluids ein aus Rohrabschnitten und Fittings bestehendes Rohrleitungssystem installiert wird. Als Fitting wird grundsätzlich ein Verbindungsstück einer Rohrleitung verstanden und wird am häufigsten zur Verbindung von zwei oder mehreren Rohrabschnitten eingesetzt. Das Fitting weist dementsprechend zwei oder mehr Pressabschnitte auf. Zu den häufigsten Fittings zählen gerade Verbindungen, Richtungswechsel in Form von Rohrbögen, Reduzierstücke, Abzweige wie T-Stücke oder Kreuzungen. Unter einem Fitting ist aber auch ein Rohranschluss einer Armatur oder einer sonstigen Komponente zu verstehen. Beispielsweise weisen Thermometer oder Manometer als Armaturen nur einen Anschluss für einen Rohrabschnitt auf. Somit weist dieser Fitting dann nur einen Pressabschnitt auf, um einen Rohrabschnitt an der Armatur anzuschließen.

Für das Verbinden der Rohrabschnitte mit den Fittings und sonstigen Komponenten werden Pressverbindungen genutzt, bei denen ein Pressabschnitt eines Fittings bei eingestecktem Rohrabschnitt mittels eines Presswerkzeugs radial nach innen so umgeformt wird, dass eine dauerhafte und dichte, gegebenenfalls sogar unlösbare Verbindung hergestellt wird. Die Fittings können dabei mit einem Dichtungsmittel, beispielsweise mit einem O-Ring, versehen sein, das die Dichtheit der Verbindung gewährleistet, oder auch mittels eines direkten Kontakts der Materialien des Rohrabschnitts und des Fittings, beispielsweise metallisch dichtend ausgebildet sein.

Als Presstechnik für ein radiales Umformen des Pressabschnittes kommen rein radial wirkende Presssysteme als auch Presssysteme in Frage, die ein radial-axiales Verpressen nutzen, wobei während des Pressvorgangs ein Teil des Fittings axial verschoben wird, um dadurch ein radiales Umformen zu bewirken. Darüber hinaus sind auch rein axial wirkende Presstechniken bekannt.

In der US 2012/0246902 A1 ist ein Querkompressionswerkzeug zum Verbinden von Verbindungsstücken mit Koaxialkabeln offenbart, wobei ein axiales Verpressen genutzt wird.

In der US 57447 A2 wird ein Handschraubstock oder eine Klammer offenbart.

Die EP 0791433 A1 offenbart einen Apparat zum Installieren von Klemmringen, wobei ein radiales Verpressen genutzt wird.

Die zuvor allgemein beschriebenen Rohrleitungssysteme dienen insbesondere einem Transport von Trink- oder Heizungswasser, von Gas oder Öl zum Betrieb einer Heizungsanlage oder von Medien in Industrieanlagen.

Üblicherweise werden die genannten Fittings durch Einsatz eines Presswerkzeugs verpresst. Dabei sind Presswerkzeuge mit zwei Pressbacken, die gelenkig miteinander verbunden sind, bekannt. Die Pressbacken solcher Presswerkzeuge weisen üblicherweise einen Hebelabschnitt und einen Pressabschnitt mit einen Aufnahmebereich bildenden Pressflächen auf. Ist ein Fitting in dem Aufnahmebereich aufgenommen, so werden Presskräfte von den Hebelabschnitten über den Pressabschnitt auf das Fitting übertragen.

Die Hebelabschnitte des Presswerkzeugs können bekannter Weise per Hand oder durch Anschluss mit einem weiteren Werkzeug zusammen oder auseinander gedrückt werden. Dabei kommen überwiegend aufwändige elektrische Presswerkzeuge zur Anwendung. Diese sind mit hohen Anschaffungskosten sowie einer aufwändigen Wartung verbunden, so dass die Presswerkzeuge bei geringen Stückzahlen oder bei niedriger Kapitalkraft nicht eingesetzt werden. Die zugehörigen Pressbacken sind zudem wegen der Presswerkzeuge oft überdimensioniert, da sie auf das Presswerkzeug und nicht auf die notwendige Presskraft des Fittings ausgelegt sind. Daneben gibt es Presswerkzeuge, die durch einen Antrieb, beispielsweise einer Bohrmaschine oder eines Akkuschraubers oder manuell betätigt werden, bei denen aber die Bedienung kompliziert ist. So ist es bekannt, dass ein solches Presswerkzeug nur bei einer Drehrichtung einen Presshub durchführt und vor einem nächsten Presshub wieder in die Ausgangslage zurück versetzt werden muss. Alternativ müssen solche Presswerkzeuge vor einer Drehrichtungsänderung manuell für einen nächsten Presshub umgeschaltet werden.

Fittings sind üblicherweise so ausgestaltet, dass sie eine ausreichend dichte Rohrverbindung bewirken, wenn sie ausreichend verpresst worden sind. Mit den zuvor beschriebenen Presswerkzeugen mit Drehantrieb kann allerdings oft nicht oder schwierig festgestellt werden, ob während eines Pressvorgangs eine ausreichende Presskraft ausgeübt worden ist.

Der Erfindung liegt demnach das technische Problem zugrunde, ein Presswerkzeug und ein Verfahren anzugeben, um Fittings zur Herstellung von Rohrverbindungen auf einfache und kostengünstige Weise zu verpressen.

Die Aufgabe wird erfindungsgemäß durch ein eingangs genanntes Presswerkzeug nach Anspruch 1 und einem Pressverfahren nach Anspruch 9 gelöst.

Da die Verbindung der Hebelabschnitte mit einem Antriebshebel und die Verbindung der Antriebshebeln mit der Spindelmutter verschwenkbar sind und da die Spindelmutter entlang der Erstreckungsachse der Antriebsspindel beweglich ist, kann eine Bewegung der Spindelmutter das Auseinander- und Zusammendrücken der Hebelabschnitte bewirken. Hierzu erfolgt vorzugsweise die Bewegung der Spindelmutter durch Anwendung eines Drehmoments an der Antriebsspindel.

Die Antriebsspindel weist dazu vorzugsweise an einem Ende ein Verbindungsmittel zur Verbindung mit einem Werkzeug auf, wobei das Werkzeug dazu eingerichtet ist, ein Drehmoment über das Verbindungmittel zu der Antriebsspindel zu übertragen. So können Drehmomente mit verschiedenen Arten von Werkzeugen angewendet werden. Ein einfaches Werkzeug wäre zum Beispiel eine Handkurbel, die mit ihrer Längsachse senkrecht zur Erstreckungsrichtung der Antriebsspindel angeordnet ist. Dadurch kann das Presswerkzeug per Hand angetrieben werden und zwar unabhängig von der Handspanne des Nutzers.

Weiterhin ist es bevorzugt, das Ende der Antriebsspindel mit einer Verbindung mit einem elektrisch betriebenen Werkzeug, wie zum Beispiel einen Akku-Schrauber oder eine Bohrmaschine auszubilden, beispielweise durch eine Sechskantform. Dadurch kann das Presswerkzeug motorisch mit einem auch für andere Anwendungen einsetzbaren elektrischen Werkzeug angetrieben werden.

Somit drücken / ziehen die Antriebshebel als Folge einer Bewegung der Spindelmutter entlang der Antriebsspindel die Hebelabschnitte der Pressbacken zunächst auseinander und dann bei der weiteren Bewegung wieder zusammen. Die Antriebshebel durchführen also einen vollständigen Presshub. Folglich bewirkt die Bewegung der Spindelmutter ausgehend von einem geöffneten Aufnahmebereich ein Schließen und wieder Öffnen des Aufnahmebereichs. Somit kann nach einem vollständigen Presshub durch Umschalten der Antriebsrichtung ein erneutes vollständiges Verpressen eines Fittings erfolgen. Dies stellt insbesondere den Vorteil dar, dass ein weiteres Verpressen durchgeführt werden kann, ohne dass das Werkzeug durch einen Leerhub in seine Ausgangsposition zurückgeholt werden muss.

Der beschriebene Bewegungsablauf wird auch so beschrieben, dass in einer ersten Endposition der Spindelmutter der Aufnahmebereich offen ist, dass in einer Pressposition der Spindelmutter der Aufnahmebereich geschlossen ist und dass in einer zweiten Endposition der Spindelmutter der Aufnahmebereich erneut offen ist. Dabei steht der Antriebshebel in der Pressposition im Wesentlichen senkrecht zur Achse der Antriebsspindel, während die Antriebshebel in den beiden Endpositionen einen entgegengesetzten Winkel, insbesondere einen gleichen großen, aber entgegengesetzten Winkel zur Achse der Antriebsspindel aufweisen. Insoweit wird bevorzugt eine symmetrische Antriebshebel- bzw. Kniehebelanordnung genutzt.

In den Endpositionen sind die Pressbacken vorzugsweise so weit geöffnet, dass sich die Pressabschnitte der Pressbacken von dem dann verpressten Fitting lösen lassen. Somit ist eine eindeutige optische Prüfung möglich, ob das durchzuführende Verpressen des Fittings vollständig erfolgt ist. Denn die zur anfänglichen Endposition gegenüberliegende Endposition kann nur erreicht werden, wenn zwischendurch die Pressposition durchlaufen worden ist.

Zudem kann insbesondere bei einem manuellen Antrieb des Presswerkzeugs, aber auch bei einem motorischen Antrieb die Vollständigkeit des Verpressens für den Nutzer bemerkbar sein, in dem das Überschreiten des maximalen aufzubringenden Drehmoments in der Pressposition durch einen Drehmomentanstieg und anschließendem Drehmomentabfall spürbar ist. Denn das ausgeübte Drehmoment ist für den Benutzer beim Halten des Presswerkzeugs, gegebenenfalls mittels eines am Presswerkzeugs befestigten Handgriffs direkt spürbar.

Ein weiterer Vorteil ist, dass das Presswerkzeug allein durch die gewählte Geometrie nur die Presskraft an dem Fitting überträgt, die für das bestimmungsgemäße Verpressen eines Fittings durch die Geometrie der Pressabschnitte vorgesehen ist. So wird einerseits sichergestellt, dass eine dichte Rohrverbindung hergestellt wird und andererseits wird verhindert, dass das Fitting durch zu hohe Presskräfte beschädigt wird. Des Weiteren wirken sich zu hohe oder überdimensionierte Antriebsleistungen nicht negativ auf die Lebensdauer des Presswerkzeugs aus. Folglich kann das Presswerkzeug insgesamt kraft- und gewichtsoptimiert ausgestaltet sein. Zudem kann das Presswerkzeug bis zum Ende dessen Lebensdauer wartungsfrei bleiben.

Die Pressbacken des Presswerkzeugs können aus einem beliebigen Material ausgebildet sein, wobei ein Material mit einer zum Vermeiden einer plastischen Verformung der Pressbacken ausreichenden Festigkeit bevorzugt ist. Die Ausgestaltung der Pressbacken mit einem solchen Material, wie zum Beispiel einem Metall, stellt den Vorteil dar, dass Kräfte, die an die Hebelabschnitte angewendet werden, in einer effizienten Weise zu den Pressabschnitten übertragen werden.

Weiterhin ist bevorzugt, dass die Hebelabschnitte mit einer längeren Länge als die Pressabschnitte ausgebildet sind. So wird mit Einsatz einer geringen Kraft an den Hebelabschnitten eine höhere Presskraft an die Pressabschnitte übertragen.

Die Pressabschnitte bilden einen Aufnahmebereich für die Aufnahme eines Fittings aus. Die Presskontur des Aufnahmebereichs ist an die Außengeometrie eines spezifischen oder einer Vielfalt an Fittings angepasst. Dadurch können Presskräfte passend zu dem zu verpressenden Fitting übertragen werden. Dabei kann das Presswerkzeug für ein zu der Erstreckungsrichtung der zur verbindenden Rohren radiales oder radial-axiales Verpressen eingerichtet sein.

Der Aufnahmebereich kann auch zur Aufnahme einer Schiebehülse und eines korrespondierenden Elementes des Fittings für ein axiales Verpressen des Fittings ausgebildet sein.

Vorzugsweise erstrecken sich die Pressbacken im Wesentlichen entlang einer Längsachse. Vorstellbar ist jedoch auch, dass die Hebelabschnitte sich entlang einer ersten Längsrichtung erstrecken und dass die Pressabschnitte sich entlang einer zweiten, der ersten Längsrichtung parallelen Längsrichtung erstrecken. So würden sich die Pressbacken in einem zusammengebauten Zustand des Presswerkzeugs zwischen deren Hebelabschnitten und deren Pressabschnitten in der Art einer Schere kreuzen.

Vorzugsweise weist das Halteelement mindestens eine Schwenkachse, insbesondere aber zwei Schwenkachsen auf, um die Pressbacken verschwenkbar miteinander zu verbinden. Hierzu ist das Haltelement zwischen dem Hebelabschnitt und dem Pressabschnitt der jeweiligen Pressbacken angeordnet. So können Presskräfte durch Verschwenken der Pressbacken von den Hebelabschnitten zu den Pressabschnitten übertragen werden.

Bei einem weiteren Ausführungsbeispiel des Presswerkzeugs bewirkt eine Schwenkbewegung der Pressbacken eine symmetrische Bewegung der Pressabschnitte. Dies ist besonders vorteilhaft, wenn das zu verpressende Fitting eine rotationssymmetrische Pressfläche aufweist.

Die zuvor genannte Aufgabe wird auch durch ein Verfahren zum Verpressen von Fittings zur Herstellung von Rohrverbindungen gelöst, bei dem ein zuvor beschriebenes Presswerkzeug mit zwei einen Aufnahmebereich bildenden Pressbacken eingesetzt wird und bei dem durch Anwendung eines Drehmoments das Presswerkzeug von einer ersten Endposition über eine Pressposition zu einer zweiten Endposition verfahren wird, wobei in der ersten Endposition und in der zweiten Endposition der Aufnahmebereich offen ist und wobei in der Pressposition der Aufnahmebereich geschlossen ist. Somit wird bei jedem Verfahren des Presswerkzeugs von einer Endposition zu einer anderen Endposition ein vollständiges Verpressen erreicht. Kehrt man die Antriebsrichtung um, so kann direkt ein erneuter Pressvorgang erfolgen und das Presswerkzeug muss nicht in eine Ausgangsposition zurück gefahren werden.

Das Presswerkzeug wird somit abwechselnd in zwei Antriebsrichtungen durch entgegengesetzte Drehmomente angetrieben. So wird die Spindelmutter durch Anwendung eines ersten Drehmoments von der ersten Endposition zu der zweiten Endposition verfahren, und durch Anwendung eines zweiten, entgegengesetzten Drehmoments von der zweiten Endposition zu der ersten Endposition verfahren. Hierbei werden unabhängig der Richtung des angewendeten Drehmoments die gleichen Presskräfte an die Pressabschnitte der Pressbacken übertragen. Dadurch wird das Verpressen mehrerer Fittings auf zuverlässiger Weise erleichtert.

Bei einem weiteren Ausführungsbeispiel des Presswerkzeugs ist mindestens ein Federanschlag zur Federung der Bewegung der Spindelmutter in einer Endposition vorgesehen. Die Federung kann als Druckfeder auf der Antriebsspindel ausgebildet sein. In einem entsprechenden Ausführungsbeispiel des Verfahrens werden die Pressbacken in der ersten Endposition und in der zweiten Endposition gefedert. Dadurch wird ein Drehmomentanstieg erzeugt, der für den Nutzer spürbar ist. Somit kann auf einfacher Weise durch den Drehmomentanstieg, der nichts mehr mit dem eigentlichen Verpressen des Fittings zu tun hat, das Erreichen einer Endposition, das heißt ein vollständiges Verpressen erkannt werden.

Bei einer alternativen Ausgestaltung des Presswerkzeugs kann das Ende des Pressvorgangs dadurch erkannt werden, dass die Antriebsspindel einen Gewindeabschnitt und zwei sich daran anschließende gewindelose Zylinderabschnitte aufweist und dass die Spindelmutter bei Erreichen einer der beiden Endpositionen außer Eingriff mit dem Gewindeabschnitt kommt. In einem entsprechenden Ausführungsbeispiel des Verfahrens wird die Spindelmutter bei Erreichen einer Endposition außer Eingriff mit Gewinde der Antriebsspindel gebracht.

Somit erfährt die Spindelmutter in einer Endposition keinen Vortrieb mehr und das Ende eines Pressvorgangs kann somit in einfacher Weise erkannt werden. Zudem wird dadurch erreicht, dass beim Verfahren der Spindelmutter von einer Endposition zu einer anderen Endposition es nur ein Drehmomentmaximum gibt. Dadurch kann zum Beispiel ein mit dem Presswerkzeug verbundener Akku-Schrauber geschont, also die Akku-Laufzeit verlängert werden.

Weiterhin können Federn an dem ersten und an dem zweiten Ende der Antriebsspindel vorgesehen sein. Dadurch kann die Spindelmutter beim Umschalten zwischen zwei entgegengesetzten Drehmomenten auf das Gewinde der Antriebsspindel selbsttätig wieder eingefädelt werden.

Bei einem weiteren Ausführungsbeispiel des Presswerkzeugs weist das Haltelement ein Federelement zur Federung der Pressbacken auf. Dabei ist das Federelement vorzugsweise mindestens teilweise aus einem Polymermaterial ausgebildet und trägt die Lagerung der mindestens einen Achse zum verschwenkbaren Verbinden der Pressbacke mit der Halterung. Neben einer Ausgestaltung aus einem elastischen Material können auch Metallfedern eingesetzt werden. Der Einsatz des Federelements ermöglicht eine mechanisch besonders einfache und kompakte Ausgestaltung des Presswerkzeugs mit verbesserten Presseigenschaften.

Des Weiteren kann mindestens ein Federmittel zur Federung der Verbindung der Spindelmutter mit den Antriebshebeln und/oder zur Federung der Verbindung zwischen den Antriebshebeln und den Pressbacken und/oder zwischen der Halterung und den Pressbacken, insbesondere eine federnde Lagerung der Bolzen in der Halterung, vorgesehen sein. Das Federmittel kann beispielsweise als spiralförmige Feder, als Tellerfeder oder als Elastomerfeder ausgestaltet sein. Dies ermöglicht einen Ausgleich von den übertragenen Presskräften in der Symmetrieebene der Pressbacken. So kann ein vollständiges und bestimmungsgemäßes Verpressen des Fittings erfolgen, unabhängig von eventuellen Abweichungen der Formgebung des Fittings innerhalb von Fertigungstoleranzen, von Setzverhalten der Mechanik des Presswerkzeugs oder von Verschleiß des Presswerkzeugs.

Die zuvor beschriebene Anordnung des Federmittels bewirkt einen Ausgleich der Presskräfte, bevor die Presskräfte von der Spindelmutter durch die verschwenkbaren Verbindungen auf die Antriebshebel bzw. durch die Antriebshebel auf die Hebelabschnitte der Pressbacken übertragen werden. Somit werden die verschwenkbaren Verbindungen von Richtungsunterschieden der Presskräfte entlastet, was die Lebensdauer des Presswerkzeugs erhöhen kann.

Wie bereits oben erläutert, ist es bevorzugt, dass die Geometrie des Presswerkzeugs über die Längsachse der Antriebsspindel axialsymmetrisch ausgebildet ist. Dies ermöglicht eine besonders einfache Herstellung und einen einfachen Aufbau des Presswerkzeugs. Weiterhin kann dadurch besonders einfach sichergestellt werden, dass das Fitting von den zwei Pressbacken gleich verpresst wird.

Bei einem weiteren Ausführungsbeispiel des Presswerkzeugs sind die Antriebshebel gebogen, insbesondere C-förmig ausgebildet. Die Antriebshebel weisen somit eine im Vergleich zu im Wesentlichen gerade ausgestalteten Antriebshebeln eine erhöhte Elastizität in Erstreckungsrichtung zwischen den Verbindungen mit dem Hebelabschnitt und der Spindelmutter auf. Dadurch können Fertigungstoleranzen des zu verpressenden Fittings durch gezielte Verformung der Antriebshebel ausgeglichen werden.

Ebenfalls vorstellbar ist, das Presswerkzeug mit Seitenplatten zu versehen, die den zuvor beschriebenen Toleranzausgleich ermöglichen.. Dies kann durch eine gezielte Nutzung der elastischen Werkstoffeigenschaften, z. B. eines Metalls, erreicht werden. Eine weitere Einflussgröße stellt die Geometrie dieser Seitenplatte dar.

Weiterhin können für den Toleranzausgleich über die Pressbacken die zuvor beschriebenen Effekte genutzt werden. So können Unregelmäßigkeiten der Formgebung von Fittings innerhalb einer Fertigungstoleranz durch entsprechende Verformung der Pressbacken ausgeglichen werden. Die Elastizität der Pressbacken muss jedoch so eingestellt sein, dass ein zuverlässiges Verpressen des Fittings erfolgt. Vorzugsweise wird als Material ein vergüteter Werkzeugstahl mit harter Oberfläche und mit elastischem Kern, beispielsweise aus einem Kunststoff, eingesetzt.

Bei einem entsprechenden Ausführungsbeispiel des Verfahrens wird eine Fertigungstoleranz einer Rohrverbindung durch Federung einer Verbindung und/oder durch die Formgebung der Antriebshebel ausgeglichen, wobei die Verbindung eine Verbindung zwischen den Pressbacken, eine Verbindung zwischen einem Antriebshebel und einem Hebelabschnitt und/oder eine Verbindung zwischen einem Antriebshebel und der Spindelmutter ist.

Somit können Fittings vollständig verpresst werden, auch wenn die zu verpressenden Fittings innerhalb einer Fertigungstoleranz unterschiedliche Außendurchmesser oder sonstige Abmessungen aufweisen.

Bei einer weiteren Ausgestaltung des zuvor beschriebenen Presswerkzeugs ist vorgesehen, dass die Pressbacken über einen Ratschenmechanismus miteinander verbunden sind. Der Ratschenmechanismus dient dazu, dass ein Presshub, also das Verfahren der Spindelmutter von einer Endposition zur anderen Endposition, ohne Umkehrung der Bewegung durchgeführt wird. Bei verfrühtem Umschalten der Spindeldrehrichtung blockiert das Presswerkzeug aufgrund der Verbindung durch den Ratschenmechanismus, ein Zurückfahren ist deshalb nicht möglich. Nach dem Verpressen, also zumindest nach Überschreiten der mittleren Pressposition der Spindelmutter und anschließendem Erreichen der Endposition, kann das Presswerkzeug in die Endposition verfahren und vom Fitting entfernt werden. Die Änderung der Drehrichtung startet dann einen neuen Pressvorgang. Die Positionierung des Ratschenmechanismus zwischen den beiden Pressbacken gewährleistet die Ratschenfunktion unabhängig von der Drehrichtung der Spindel.

Das entsprechende Verfahren ist durch die Verfahrensschritte charakterisiert, dass eine Zwischenposition, die beim Verfahren des Presswerkzeugs von der ersten Endposition zu der zweiten Endposition oder von der zweiten Endposition zu der ersten Endposition erreicht wird, gehalten wird.

Eine alternative Ausführungsform des Presswerkzeugs zum Sicherstellen eines vollständigen Pressvorgangs besteht darin, dass die Spindelmutter ein Gehäuse und eine innere Mutter aufweist und dass die Spindelmutter für eine Überholkupplung bzw. für einen Freilauf in zwei Antriebsrichtungen eingerichtet ist.

In einer ersten Ausgestaltung, die mit dem Begriff "ziehende innere Mutter" beschrieben werden kann, wird die innere Mutter mittels einer axialen Verriegelung unter einem ersten Freilauf gehalten. Dieser sperrt in Antriebsrichtung der Anstriebsspindel. Das Gehäuse führt eine Axialbewegung entlang der Antriebsspindel und über die beschriebene Hebelmechanik das Verpressen des Fittings aus. Bei einem vorzeitigen Wechsel der Drehrichtung löst sich der Freilauf und die innere Mutter dreht mit der Spindel auf der Stelle, ohne eine Rückwärts- bzw. Öffnungsbewegung entlang der Antriebsspindel zu erzeugen.

Bei Erreichen der Gehäuse-Endlage mit korrekter Drehrichtung wird unter fortwährendem Eingriff in den ersten Freilauf die innere Mutter aus der axialen Verriegelung gelöst und axial in einen zweiten Freilauf sowie in eine entsprechende Verriegelung geschoben. Dabei gelangt die innere Mutter außer Eingriff mit dem ersten Freilauf und die innere Mutter dreht im Leerlauf. Bei Umschalten der Drehrichtung sperrt der dann im Eingriff befindliche zweite Freilauf und treibt die Mechanik nun in umgekehrter axialer Richtung an.

Die axiale Verriegelung der inneren Mutter mit dem Gehäuse kann kraftgesteuert entsperrt werden, z. B. über einen Spannring in einer Nut oder federbelastete Druckstücke. Ebenso kann der bei Erreichen der jeweiligen Endlage der Entriegelungsmechanismus aktiviert werden.

In einer zweiten Ausgestaltung, die mit dem Begriff "schiebende innere Mutter" beschrieben werden kann, überträgt die innere Mutter die Schubkraft über eine Anlagefläche oder Anschlag am Gehäuseende, z. B. einem Deckel. Zum Start befindet sich die innere Mutter auf einem Spindelbereich ohne Gewinde, also einem Zylinderabschnitt, und eine zylindrische Feder sorgt für das Einfädeln. Die innere Mutter führt eine Axialbewegung im Gehäuse von einem ersten gelösten Freilauf in einen zweiten sprerrenden Freilauf hinein bis zum Anschlag im Gehäuse aus. Dabei kann das Gehäuse ebenfalls eine Axialbewegung ausführen. Die Relativbewegung der inneren Mutter im Gehäuse ist spätestens dann abgeschlossen, wenn sich durch den Kontakt mit dem Fitting eine Gegenkraft aufbaut. Nun beginnt das eigentliche Verpressen.

Beim vorzeitigen Wechsel der Drehrichtung löst der zweite Freilauf und die innere Mutter dreht mit der Spindel auf der Stelle, ohne eine Rückwärts- bzw. Öffnungsbewegung zu erzeugen. Bei Erreichen der Endlage mit korrekter Drehrichtung läuft die innere Mutter vom Gewinde herunter und in den Zylinderabschnitt hinein, wie oben bei der Beschreibung der Ausgangsposition erwähnt worden ist. Beim Umschalten der Drehrichtung fädelt die Mutter wieder ein und ein neues Verpressen eines Fittings kann gestartet werden.

Das zugeordnete Verfahren erfolgt so, dass eine vollständige Verpressung einer Rohrverbindung durch Einsatz einer Überholkupplung erreicht wird.

Der Vorteil der doppelten Überholkupplung bzw. des doppelten Freilaufs besteht darin, dass ein vollständiges Verpressen eines Fittings garantiert wird. Bei zu frühem Umschalten der Spindeldrehrichtung, löst sich der jeweilige gesperrte Freilauf und die Spindel dreht im Leerlauf, ohne eine Hubbewegung zu verursachen. Somit wird erzwungen, eine einmal angefangene Drehrichtung solange beizubehalten, bis zumindest die Pressposition durchschritten bzw. bis die jeweils entgegengesetzte Endposition erreicht ist.

Weitere Merkmale und Vorteile der vorliegenden Erfindung ergeben sich aus der nachfolgenden Beschreibung mehrerer Ausführungsbeispiele, wobei auf die beigefügte Zeichnung Bezug genommen wird. In der Zeichnung zeigen
- Fig. 1a-d: ein erstes Ausführungsbeispiel einer erfindungsgemäßen Pressvorrichtung zum Verpressen von Fittings zur Herstellung von Rohrverbindungen in drei verschiedenen Positionen eines Presshubs,
- Fig. 2: ein zweites Ausführungsbeispiel einer erfindungsgemäßen Pressvorrichtung,
- Fig. 3a, b: ein drittes Ausführungsbeispiel einer erfindungsgemäßen Pressvorrichtung,
- Fig. 4a-c: ein viertes Ausführungsbeispiel einer erfindungsgemäßen Pressvorrichtung,
- Fig. 5a-c: ein fünftes Ausführungsbeispiel einer erfindungsgemäßen Pressvorrichtung,
- Fig. 6a-e: ein sechstes Ausführungsbeispiel einer erfindungsgemäßen Pressvorrichtung,
- Fig. 7: ein siebtes Ausführungsbeispiel einer erfindungsgemäßen Pressvorrichtung,
- Fig. 8: ein achtes Ausführungsbeispiel mit einem Handgriff,
- Fig. 9a, b: ein neuntes Ausführungsbeispiel mit einem Gehäuse,
- Fig. 10a-e: ein zehntes Ausführungsbeispiel einer erfindungsgemäßen Pressvorrichtung und
- Fig. 11a-e: ein elftes Ausführungsbeispiel mit einem Pressabschnitt für ein axiales Verpressen eines Fittings.

In der nachfolgenden Beschreibung der verschiedenen erfindungsgemäßen Ausführungsbeispiele werden gleiche Bauteile mit gleichen Bezugszeichen versehen, auch wenn die Bauteile bei den verschiedenen Ausführungsbeispielen in ihrer Dimension oder Form Unterschiede aufweisen können.

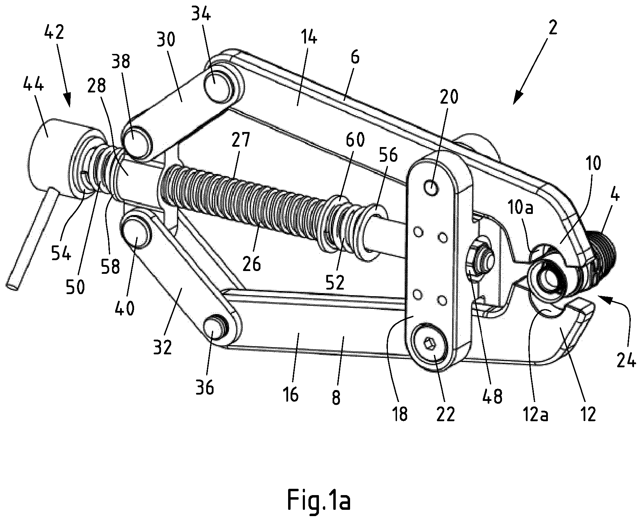

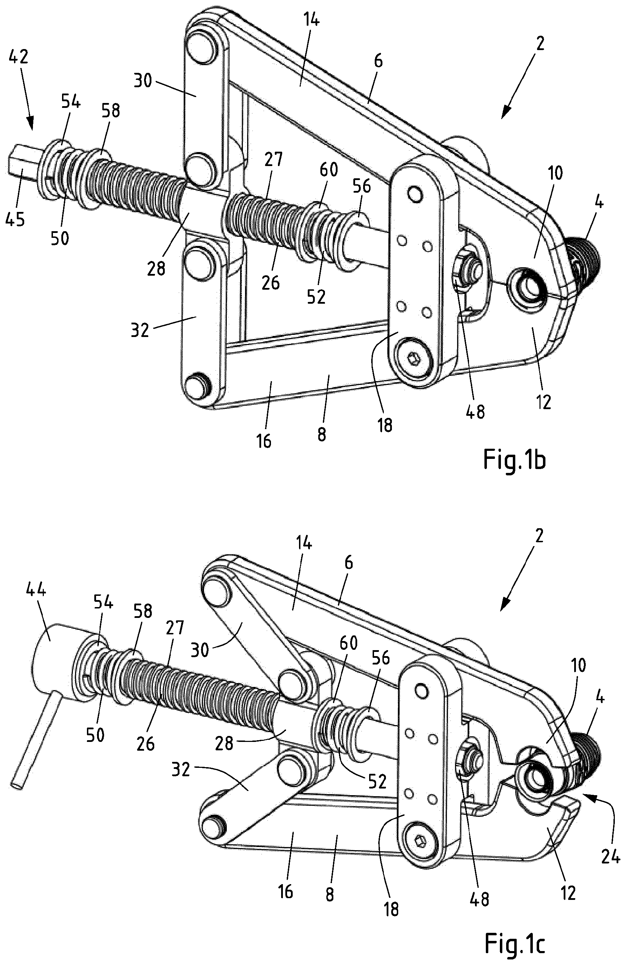

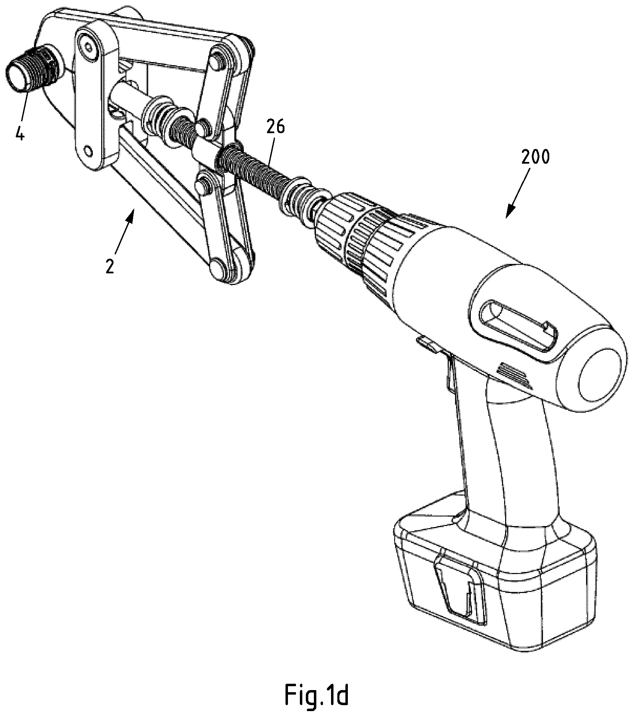

Fig. 1a bis 1c zeigen ein Presswerkzeug 2 zum Verpressen von Fittings 4 zur Herstellung einer Rohrverbindung, wobei das entsprechende Rohr in der Fig. 1 nicht gezeigt ist.

Das Presswerkzeug 2 weist zwei gegenüberliegende Pressbacken 6 und 8 auf, die jeweils einen Pressabschnitt 10, 12 und einen Hebelabschnitt 14, 16 aufweisen. Ein Halteelement 18 verbindet die Pressbacken 6 und 8 verschwenkbar mittels zweier Bolzen 20 und 22 miteinander. Die Pressabschnitte 10, 12 bilden einen Aufnahmebereich 24 aus, in dem der Fitting 4 aufgenommen wird. Die Pressabschnitte 10, 12 weisen dazu eine Innenfläche 10a, 12a mit einer an die Außenkontur des Fitting 4 angepassten Presskontur auf.

Aufgrund der dargestellten Geometrie des Presswerkzeugs 2 bewirkt ein Auseinanderdrücken der Hebelabschnitte 14, 16 ein Schließen der Pressabschnitte 10 und 12 und somit des Aufnahmebereichs 24.

Erfindungsgemäß ist eine Antriebsspindel 26, eine Spindelmutter 28 und zwei Antriebshebel 30, 32, die auch Kniehebel bezeichnet werden können, vorgesehen. Die Antriebsspindel 26 weist ein Außengewinde 27 auf.

Jeder Antriebshebel 30, 32 ist an einem Ende mit dem Hebelabschnitt 14,16 über einen als Drehachse wirkenden Bolzen 34, 36 mit einer der Pressbacken 6, 8 verschwenkbar verbunden. Des Weiteren ist jeder Antriebshebel 30, 32 an einem anderen Ende über einen als Drehachse wirkenden Bolzen 38, 40 verschwenkbar mit der Spindelmutter 28 verbunden.

An einem freien Ende 42 der Antriebsspindel 26 ist eine Handkurbel 44 vorgesehen, die über einen Innensechskant mit einem Außensechskant 45 an der Antriebsspindel 26 verbunden ist. Dadurch kann ein manuell erzeugtes Drehmoment auf die Antriebsspindel 26 angewendet werden. Das andere Ende der Antriebsspindel 26 ist in einer Lagerung 46 innerhalb des Halteelements 18 drehbar gelagert.

In einer ersten Endposition der Spindelmutter 28, die in Fig. 1a dargestellt ist, ist der Abstand zwischen den Hebelabschnitten 14, 16 groß oder maximal, so dass die Pressabschnitte 10, 12 beabstandet sind und der Aufnahmebereich 24 offen steht. Somit kann der zu verpressende Fitting 4 im Aufnahmebereich 24 angeordnet werden.

Durch Drehen der Handkurbel 44 wird die Spindelmutter 28 entlang der Antriebsspindel 26 bewegt, bis in einem in Fig. 1b dargestellten Zwischenstadium eine Pressposition der Spindelmutter 28 erreicht wird, in der ein maximaler Abstand zwischen den Pressabschnitten 14, 16 und somit die geschlossene Position der Pressabschnitte 10, 12 erreicht wird. In der Pressposition stehen die Antriebshebel 30, 32 im Wesentlichen senkrecht zur Achse der Antriebsspindel 26. Die Pressabschnitte 10, 12 liegen dann aneinander an bzw. weisen einen minimalen Abstand zueinander auf, der Aufnahmebereich 24 ist geschlossen und der Fitting 4 wird vollständig verpresst.

Durch ein weiteres Drehen der Handkurbel 44 wird eine in Fig. 1c dargestellte zweite Endposition der Spindelmutter 28 erreicht, in der der Abstand zwischen den Hebelabschnitten 14 und 16 wieder größer bzw. maximal ist. Der Aufnahmebereich 24 ist wieder offen und das Presswerkzeug 2 kann vom verpressten Fitting 4 entfernt werden.

Somit kann ein Verfahren zum Verpressen von Fittings 4 zur Herstellung von Rohrverbindungen durchgeführt werden, bei dem ein Presswerkzeug 2 mit zwei einen Aufnahmebereich 24 bildenden Pressbacken 6, 8 eingesetzt wird und bei dem durch Anwendung eines Drehmoments das Presswerkzeug 2 von einer ersten Endposition über eine Pressposition zu einer zweiten Endposition verfahren wird, wobei in der ersten Endposition und in der zweiten Endposition der Aufnahmebereich 24 offen ist und wobei in der Pressposition der Aufnahmebereich 24 geschlossen ist.

Weiterhin kann das Presswerkzeug abwechselnd in zwei Antriebsrichtungen durch entgegengesetzte Drehmomente angetrieben werden, so dass nach jedem Wechsel der Antriebsrichtung ein erneutes Verpressen eines Fittings 4 durchgeführt werden kann.

Das in Fig. 1 dargestellte Presswerkzeug 2 ist symmetrisch zur Achse der Antriebsspindel 26 ausgebildet, so dass eine Schwenkbewegung der Pressbacken 6, 8 eine symmetrische Bewegung der Pressabschnitte 10, 12 bewirkt. Die Symmetrie ist in den beiden Fig. 1a und 1c daran zu erkennen, dass der jeweilige Winkel zwischen den Antriebshebeln 30, 32 und der Antriebsspindel 26 zwar entgegengesetzt, aber vom Betrag her im Wesentlichen gleich groß ist. Ein Hin- und Herbewegen der Spindelmutter 28 resultiert dann in zwei nahezu gleichen Pressvorgängen. Aufgrund von mechanischem Spiel oder anderen Ungenauigkeiten sind die Bewegungsabläufe nur im Idealfall identisch.

Um das Ende eines Pressvorgangs zu erkennen, werden die nachfolgend beschriebenen Maßnahmen getroffen.

Wie den Fig. 1a und 1c dargestellt ist, sind zwei Federanschläge bestehend aus einer zylindrischen Feder 50, 52 und Anschlägen 54, 56 sowie zwei Anschlagringe 58, 60 zur Federung der Bewegung der Spindelmutter 28 in jeder der beiden Endpositionen vorgesehen. Dadurch wird bei Erreichen der Endposition jeweils das aufzuwendende Drehmoment stark erhöht und ein Ende des jeweiligen Pressvorgangs kann vom Benutzer festgestellt werden. In Fig. 1b sind diese Details der Übersichtlichkeit wegen weggelassen worden.

Fig. 1d zeigt das zuvor beschriebene Presswerkzeug 2, das mit einem Akkuschrauber 200 verbunden ist, der in zwei verschiedenen Drehrichtungen die Antriebsspindel 26 antreibt.

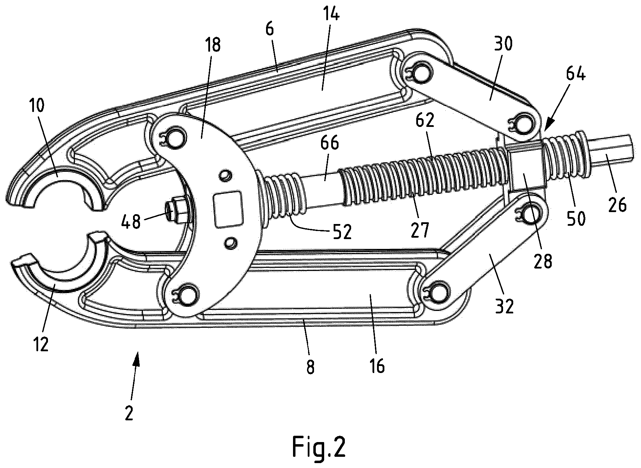

Eine weitere Möglichkeit des Erkennens des Endes eines Pressvorgangs ist in Fig. 2 dargestellt. Hier ist ein weiteres Ausführungsbeispiel eines Presswerkzeugs 2 gezeigt, bei dem die gleichen Bauteile, wie sie anhand der Fig. 1 erläutert worden sind, mit gleichen Bezugszeichen versehen.

Im Gegensatz zu Fig. 1 weist die Halterung 18 eine gebogene Form auf, so dass die Lagerung 48 bei ansonsten gleicher Geometrie einen größeren Abstand zu den Pressabschnitten 10, 12 aufweist und die Hebelabschnitte 14, 16 verlängert werden können, ohne dass die Länge der Antriebshebel 30, 32 vergrößert zu werden braucht.

Nach Fig. 2 weist die Antriebsspindel 26 ein Außengewinde 27 in Form eines Gewindeabschnitts 62 und zwei sich daran anschließende gewindelose Zylinderabschnitte 64, 66 auf. Dadurch wird bewirkt, dass die Spindelmutter 28 bei Erreichen einer der beiden Endpositionen außer Eingriff mit dem Gewindeabschnitt 62 kommt. Eine weitere Drehung der Antriebsspindel 26 bewirkt dann keinen Vorschub der Spindelmutter 28 mehr und das Ende des Pressvorgangs wird deutlich.

Die bereits im Zusammenhang mit Fig. 1 erläuterten zylindrischen Federn 50, 52 bewirken dann, dass die Spindelmutter 28 in Richtung des Gewindeabschnittes 62 gedrückt wird, so dass bei einer Umkehr der Drehrichtung der Antriebsspindel 26 die Spindelmutter 28 erneut in Eingriff mit dem Gewindeabschnitt 60 gelangt.

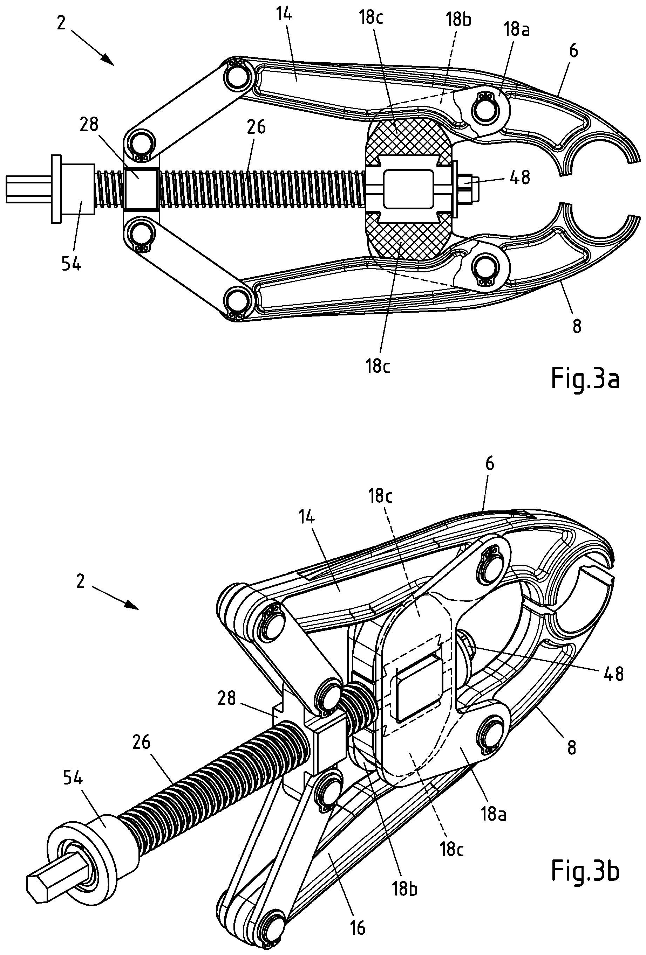

Eine weitere Möglichkeit zur Erkennung des Endes eines Pressvorgangs ist in Fig. 3a und Fig. 3b gezeigt. Zwischen der Spindellagerung 48 und den jeweiligen Pressbacken 6, 8 ist ein elastisches Element 18c angeordnet, z. B. eine Elastomerfeder oder eine Druckfeder. Dieses Element ist zwischen den äußeren Halterungsblechen 18a und 18b so angeordnet, dass auf die Hebelabschnitte 14, 16 eine Kraft übertragen werden kann. Der Kraftaufbau erfolgt durch die elastische Deformation des Federelementes.

In dem Moment der Verpressung, siehe Fig. 1b, ist die erzeugte Kraft minimal, vorzugsweise gleich null. Bei der Bewegung der Spindelmutter 28 in eine der beiden Endlagen gemäß Fig. 3a oder Fig 3b steigt die Kraft an und erreicht in den jeweiligen Endlagen das Kraftmaximum. Vergleichbar zum oben beschriebenen Konzept steigt bei dieser technischen Umsetzung das erforderliche Drehmoment zur Drehung der Antriebsspindel 26 an und das Ende des Pressvorgangs kann vom Benutzer festgestellt werden.

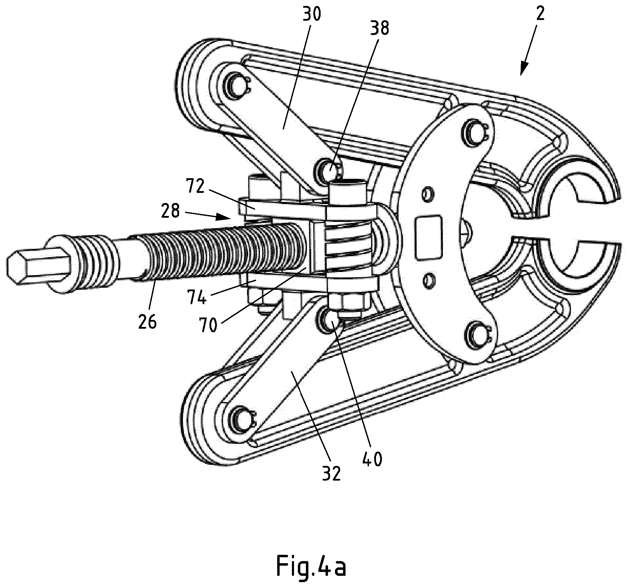

Die Fig. 4a bis 4c zeigen ein weiteres Ausführungsbeispiel einer erfindungsgemäßen Pressvorrichtung 2, bei der eine elastische Federung der Antriebshebel 30, 32 gegenüber der Antriebsspindel 28 verwirklicht ist.

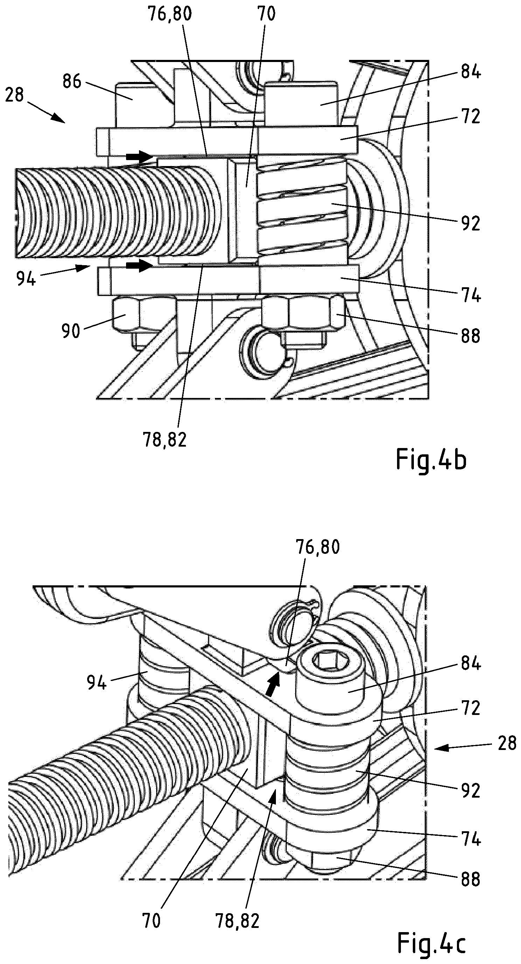

Die Spindelmutter 28 weist die folgenden Elemente auf. Eine innenliegende Mutter 70 ist zwischen zwei Halteelementen 72, 74 angeordnet, wobei die Antriebshebel 30, 32 an den Halteelementen mittels der Bolzen 38, 40 angelenkt sind. Die Mutter 70 weist zwei jeweils in Richtung der Halteelemente 72, 74 ragende Stege 76, 78 auf, die in Schlitzen 80, 82 in den Halteelementen 72, 74 zur Führung der Mutter 70 aufgenommen sind. Dieses ist in Fig. 4c mit einem kleinen Pfeil verdeutlicht.

Die beiden Halteelemente 72, 74 sind über Schrauben 84, 86 und Muttern 88, 90 miteinander verbunden und werden durch zylindrische Federn 92, 94 auseinander gedrückt. Dabei sind die Abmessungen der innenliegenden Mutter 70 und der Anordnung der Halteelemente 72, 74 so gewählt, dass ein mechanisches Spiel zwischen der Mutter 70 und den Halteelementen 72, 74 besteht, das mit den beiden Pfeilen in Fig. 4b verdeutlicht wird.

Während der Bewegung der Spindelmutter 28 entlang der Antriebsspindel 26 kommt es im Bereich der Pressposition zu den größten Kräften auf die Antriebshebel 30, 32 und die Spindelmutter 28. Da die Geometrie der Pressvorrichtung 2 auf einen Fitting mit vorgegebenen Abmessungen ausgelegt ist, können durch die Federn 92, 94 und durch das Vorsehen des beschriebenen Spiels durch Abmessungsänderungen oder Toleranzen der Abmessungen des Fittings im Betrieb automatisch ausgeglichen werden, ohne dass es zu einer zu großen Belastung des Presswerkzeugs kommt. Werksseitige Voreinstellungen, wie bei bekannten weggesteuerten Presswerkzeugen, sind nicht erforderlich.

Die in Fig. 4 dargestellte Ausführungsform verwirklicht somit eine Pressvorrichtung 2 mit zwei Federmitteln in Form der Federn 92, 94 zur Federung der Verbindung der Spindelmutter 28 mit den Antriebshebeln 30, 32.

In gleicher Weise, ohne dass es in den Figuren dargestellt ist, kann zur Federung der Verbindung zwischen den Antriebshebeln 30, 32 und den Pressbacken 6, 8 und/oder zwischen der Halterung 18 und den Pressbacken 6, 8 eine Ausgestaltung der Verbindung gemäß Fig. 4 vorgesehen sein.

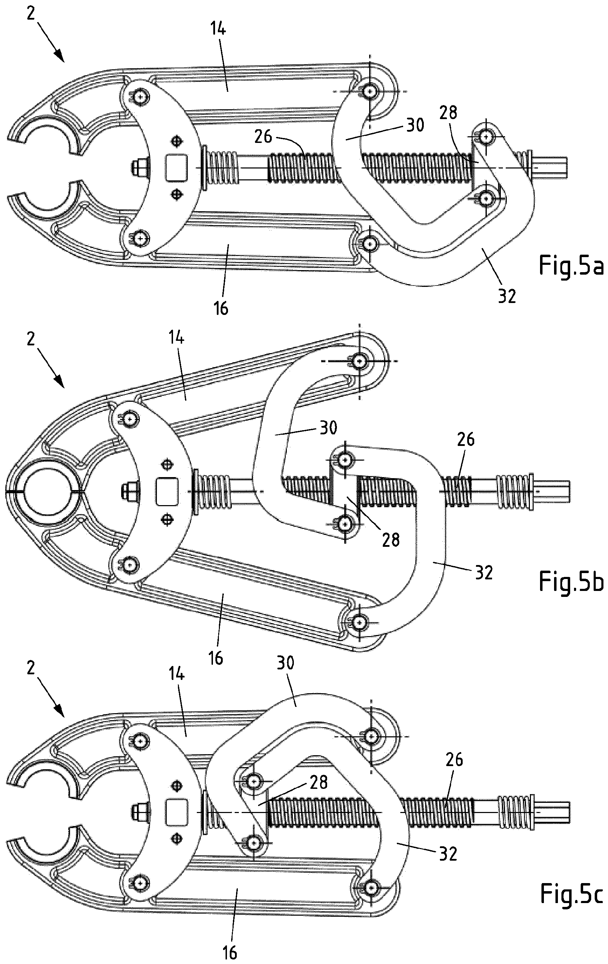

Eine weitere Möglichkeit zum automatischen Ausgleich von Abweichungen der Abmessungen des zu verpressenden Fittings wird durch das in den Fig. 5a bis 5c dargestellte Ausführungsbeispiel verwirklicht. Das Presswerkzeug 2 nach Fig. 5 weist die gleichen Bestandteile auf, wie sie im Zusammenhang mit den vorigen Ausführungsbeispielen beschrieben worden sind.

Im Unterschied zu den anderen Ausführungsbeispielen, bei denen die Geometrie des Presswerkzeugs 2 über die Längsachse der Antriebsspindel 28 axialsymmetrisch ist, sind die Antriebshebel 30, 32 gebogen und im Wesentlichen C-förmig ausgebildet. Auch bei diesem Ausführungsbeispiel nimmt die Spindelmutter 28 gemäß den Fig. 5a und 5c zwei Endpositionen ein, zwischen denen durch eine Drehung der Antriebsspindel 26 die Spindelmutter 28 bewegt wird.

Der Effekt der gebogenen Form der Antriebshebel 30, 32 kommt in der in Fig. 5b gezeigten Pressposition zum Tragen. In der Pressposition wirken die stärksten Kräfte der Hebelabschnitte 14, 16 in Richtung der Antriebsspindel 26. Sind die Kräfte wegen zu großer Abmessungen, z. B. durch ungünstige Toleranzen des zu verpressenden Fittings 4 zu groß, so können sich die Antriebshebel 30, 32 durch die gebogene Form verformen und den Kräften nachgeben. Mit anderen Worten, durch Zusammendrücken der C-Form kommt es zum Kraft- bzw. Toleranzausgleich.

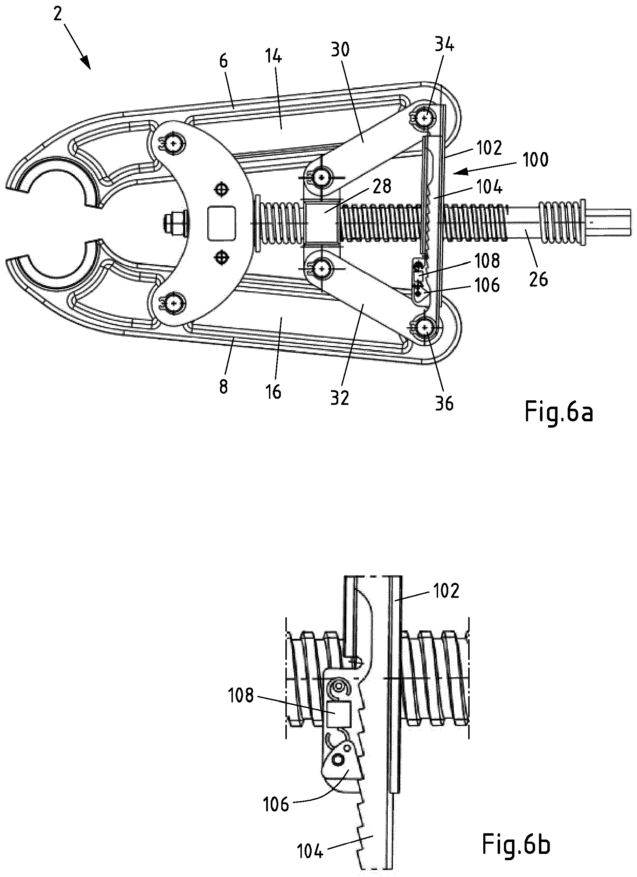

Bei dem in Fig. 6a bis 6e gezeigten weiteren Ausführungsbeispiel einer Pressvorrichtung wird ein Mechanismus verwirklicht, der ein vollständiges Durchlaufen eines Presshubs sicherstellt.

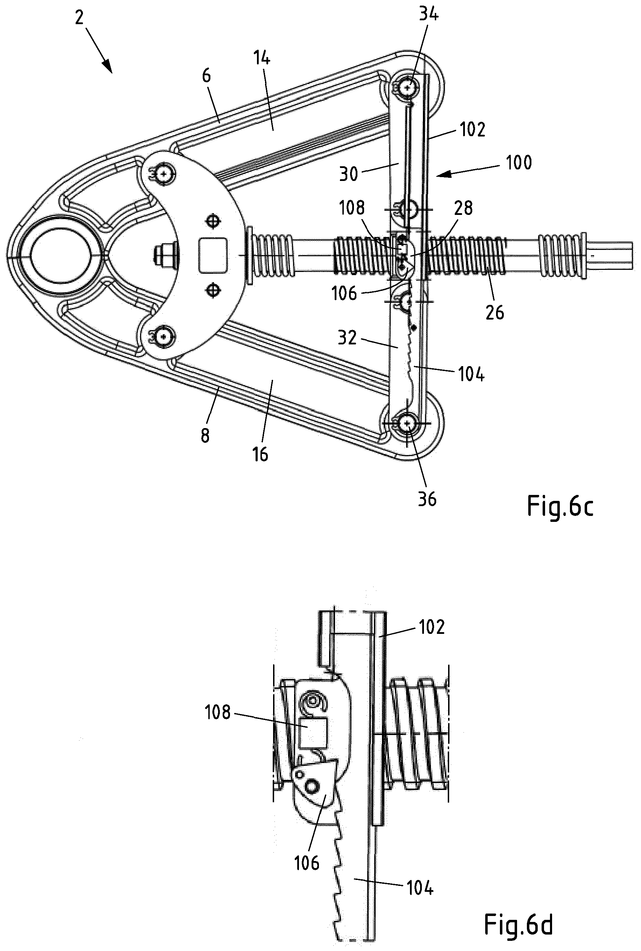

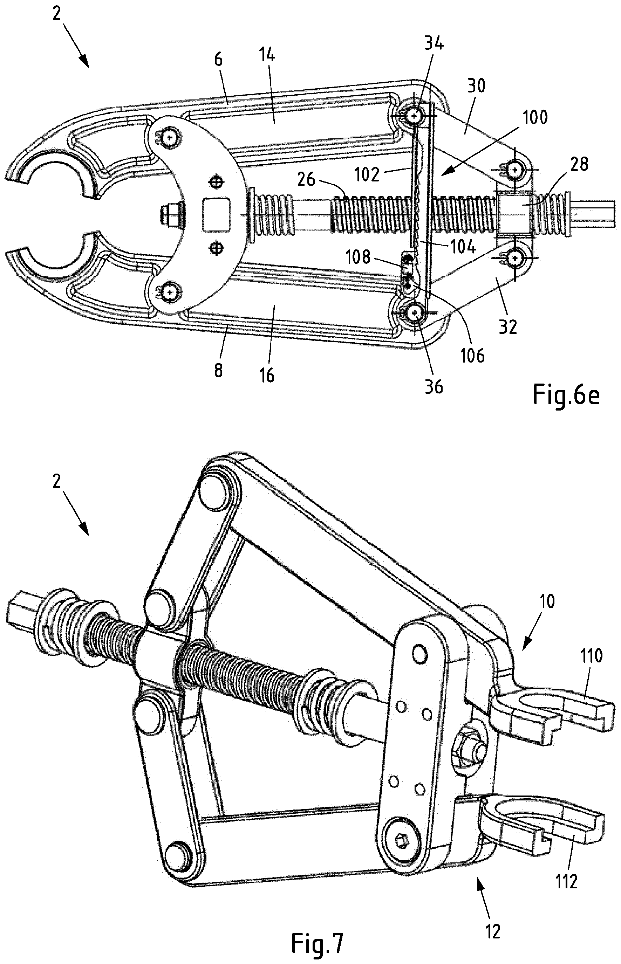

Das Presswerkzeug 2 nach den Fig. 6a, 6c und 6e weist die gleichen Bestandteile auf, wie sie in den zuvor erläuterten Ausführungsbeispielen bereits erläutert worden sind. Daher bezeichnen auch hier gleiche Bezugszeichen gleiche Elemente wie zuvor.

Zusätzlich zu den bisherigen Elementen sind die Pressbacken 6, 8 über einen Ratschenmechanismus 100 miteinander verbunden, wobei die gleichen Bolzen 34, 36 verwendet werden, die für die Verbindung der Hebelabschnitte 14, 16 mit den Antriebshebeln 30, 32 genutzt werden. Der Ratschenmechanismus 100 weist eine Führungsschiene 102 und eine Zahnstange 104 auf, wobei beispielhaft die Führungsschiene 102 mit dem oberen Hebelabschnitt 14 und die Zahnstange 104 mit dem unteren Hebelabschnitt 16 verbunden sind. Innerhalb der Führungsschiene 102 ist ein Ratschenelement 106 drehbar gelagert und mittels einer Feder 108 vorgespannt.

In der ersten Endposition nach Fig. 6a sind die Führungsschiene 102 und die Zahnstange 104 zusammengeschoben und das Ratschenelement 106 ist nicht mit der Zahnstange 104 in Eingriff. Wenn die Antriebsspindel 26 gedreht und die Spindelmutter 28 bewegt werden, dann kommt das Ratschenelement 106 in Eingriff mit der Zahnstange 104, wie in Fig. 6b gezeigt ist. Durch diesen Eingriff blockiert der Ratschenmechanismus 100 gegen eine Umkehr der Bewegung der Spindelmutter 28, da das Ratschenelement 106 durch den Eingriff mit der Zahnstange 104 blockiert wird.

Bei Erreichen der Pressposition, die in Fig. 6c gezeigt ist, kommt das Ratschenelement 106 außer Eingriff mit der Zahnstange 104. Bei fortgeführter Bewegung der Spindelmutter 28 gelangt das Ratschenelement 106 erneut in Eingriff mit der Zahnstange 104, wie in Fig. 6d gezeigt ist. Da die vollständige Verpressung erreicht ist hat die Ratsche bis zum Erreichen der Endposition gemäß Fig. 6e keine Sperrwirkung. In der zweiten Endposition nach Fig. 6e nimmt der Ratschenmechanismus 100 die Ausgangsposition wie in der ersten Endposition nach Fig. 6a ein. Ein erneuter Presshub kann somit begonnen werden.

Der Ratschenmechanismus 100 verhindert also, dass in der Phase des Zusammendrückens der Pressabschnitte 10, 12 die Bewegung der Spindelmutter 26 umgekehrt werden kann. Ein vollständiges Verpressen des Fittings 4 wird somit sichergestellt.

Die Form der Zähne der Zahnstange 104 ist asymmetrisch ausgebildet, so dass in der Position nach Fig. 6d die Zahnstange 104 nicht mehr das Ratschenelement 106 blockieren kann. Somit kann grundsätzlich die Bewegung der Spindelmutter 28 nach Durchlaufen der Pressposition nach Fig. 6c ohne Erreichen der zweiten Endposition nach Fig. 6e umgekehrt werden.

Fig. 7 zeigt ein Ausführungsbeispiel einer Pressvorrichtung 2 mit abgeänderten Pressabschnitten 10, 12, die vorliegend als Hülsenaufnahmen 110, 112 ausgebildet sind und für Fittings geeignet sind, bei denen durch ein axiales Verschieben einer Presshülse ein Verpressen des Fittings bewirkt wird. Die Hülsenaufnahmen 110, 112 bewegen sich während des Vorschubs der Spindelmutter im Wesentlichen linear aufeinander zu bzw. voneinander weg. Im Wesentlichen linear bedeutet dabei, dass die Hülsenaufnahmen 110, 112 an sich an einer Drehbewegung teilnehmen, aber wegen des geringen Winkelabschnitts diese Bewegung einer linearen Bewegung nahezu gleichgesetzt werden kann.

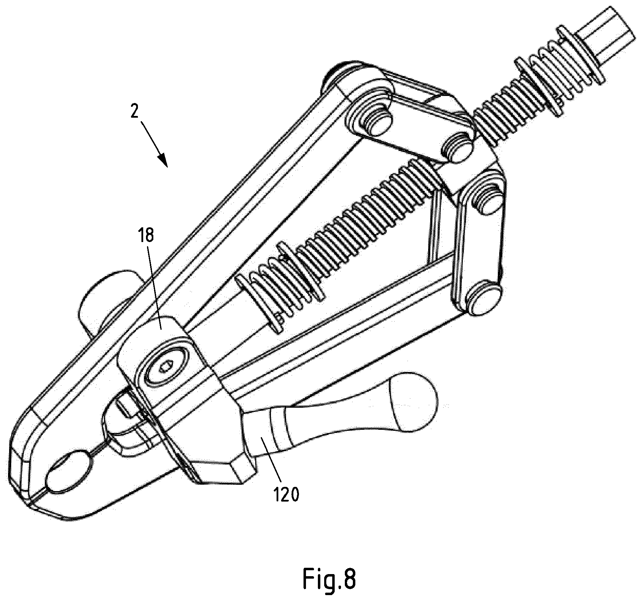

Fig. 8 zeigt ein weiteres Ausführungsbeispiel einer Pressvorrichtung 2 mit einem an der Halterung 18 befestigten Handgriff 120. Damit kann ein Benutzer das Presswerkzeug leichter handhaben.

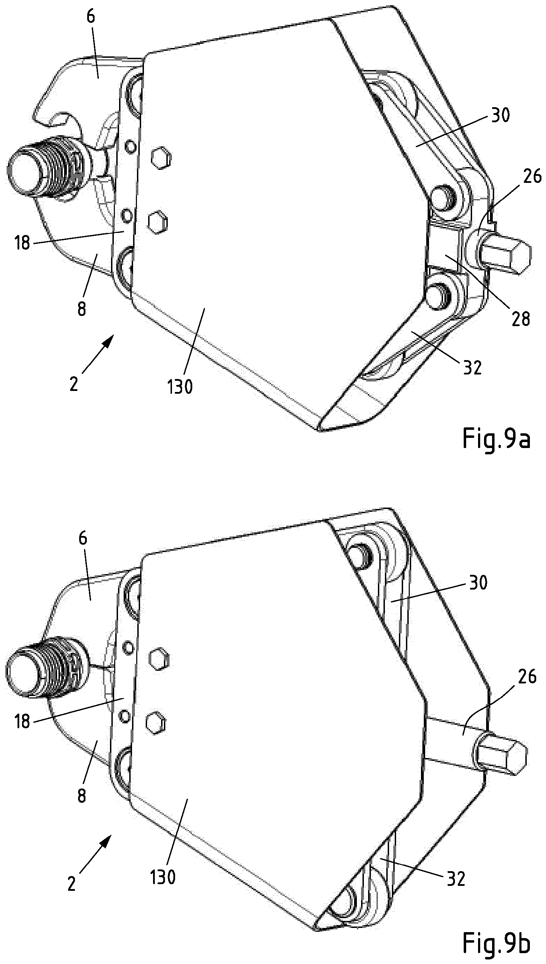

Fig. 9a und 9b zeigen schließlich ein Ausführungsbeispiel einer Pressvorrichtung 2 mit einem Gehäuse 130, die Pressbacken 6, 8, die Halterung 18, Antriebshebel 30, 32 und die Spindelmutter 28 und somit auch die Antriebsspindel 26 zumindest teilweise umgeben. Durch das Gehäuse 130 wird der Benutzer vor einem unbeabsichtigten Hineingreifen in die Mechanik der Pressvorrichtung 2 geschützt. Gegebenenfalls kann der in Fig. 8 gezeigte Handgriff 120 auch mit dem Gehäuse 130 verbunden sein.

Fig. 9a zeigt das Presswerkzeug in einer äußeren Endposition, in der die Spindelmutter 26 und die Antriebshebel 30, 32 zum Teil aus dem Gehäuse 130 herausragen. In der in Fig. 9b gezeigten Pressposition, wenn also die größten Kräfte in der Pressvorrichtung erzeugt werden, ist die gesamte Mechanik der Pressvorrichtung 2 geschützt.

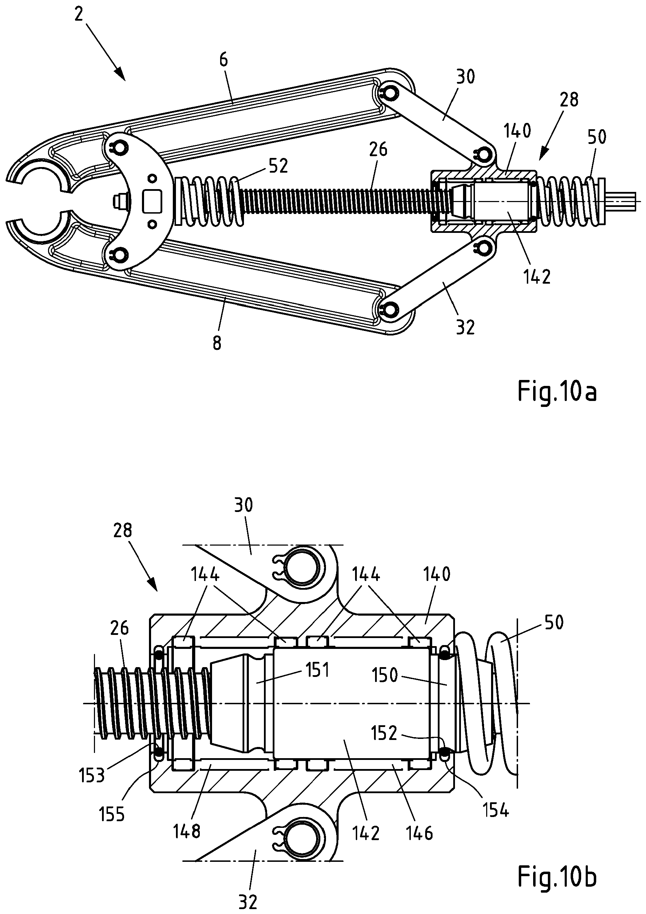

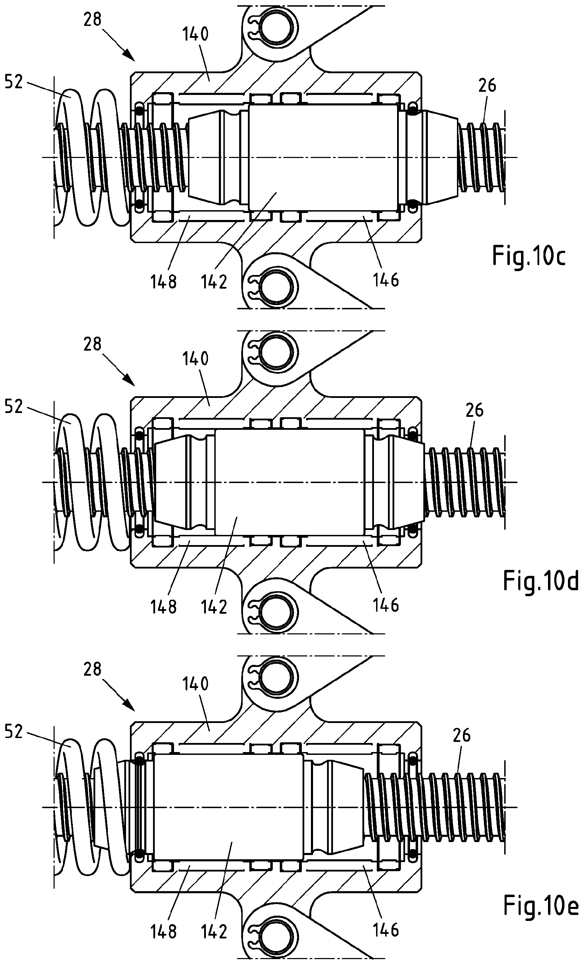

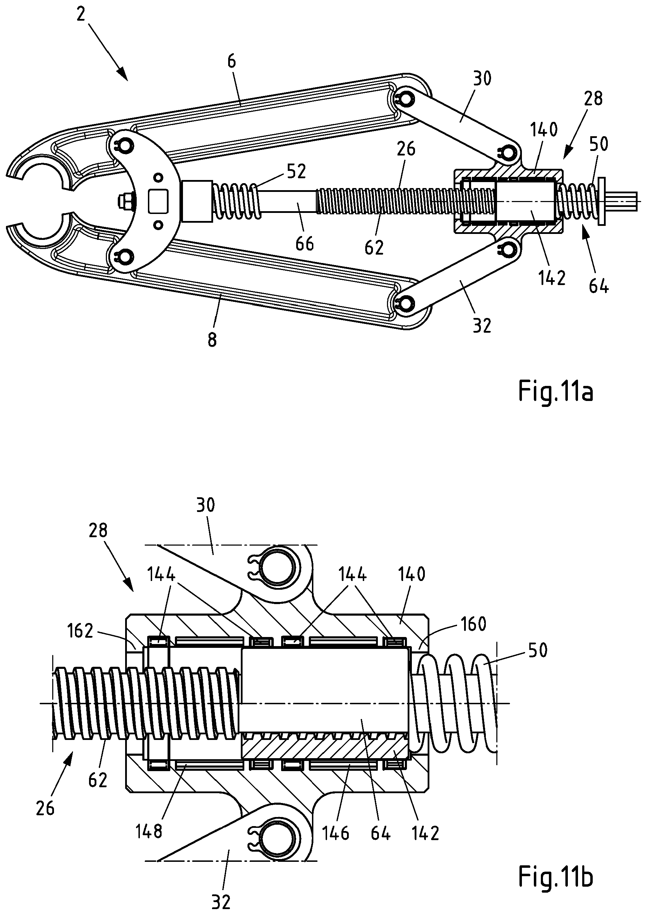

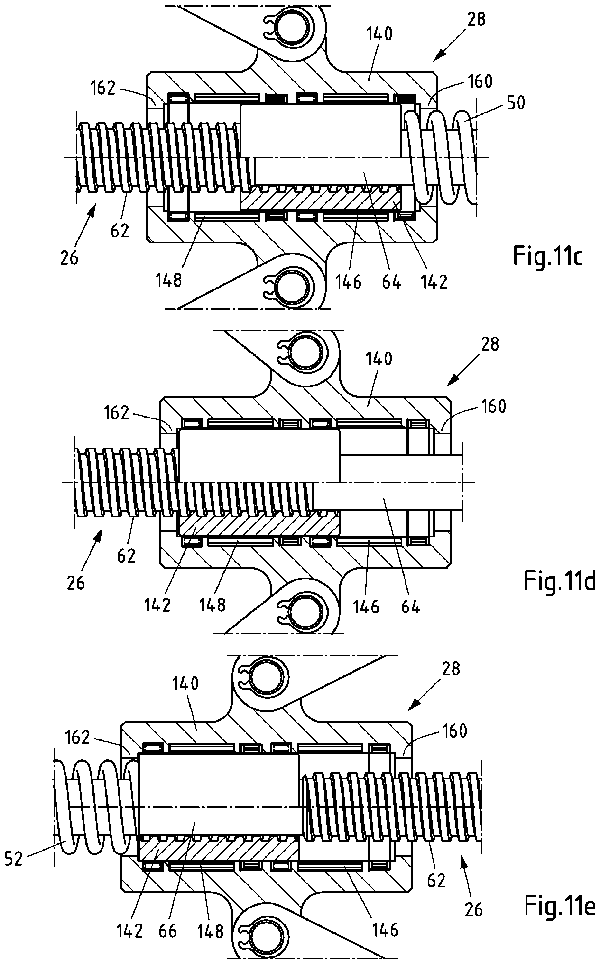

Die Fig. 10 und 11 zeigen Ausführungsbeispiele einer Pressvorrichtung 2 mit einem doppelten Freilauf, wobei die Spindelmutter 28 ein Gehäuse 140 und eine innere Mutter 142 aufweist und wobei die Spindelmutter 28 für eine Überholkupplung in zwei Antriebsrichtungen eingerichtet ist. Unter einer Überholkupplung oder auch einem Freilauf wird eine nur in einer Drehrichtung wirkende Kupplung verstanden. Im Folgenden wird der Begriff Freilauf synonym für Überholkupplung verwendet.

Die Fig. 10a-e zeigen ein Ausführungsbeispiel mit einem doppelten Freilauf mit einer ziehenden inneren Mutter 142, wie nachfolgend beschrieben wird. Innerhalb des Gehäuses 140 ist die innere Mutter 142 mittels mehrerer axial verteilter Lager 144 drehbeweglich angeordnet, wobei eine axiale Bewegung der inneren Mutter 142 relativ zu dem Gehäuse 140 möglich bleibt. Das Innengewinde der inneren Mutter 142 steht dabei mit dem Außengewinde der Antriebsspindel 26 in Eingriff.

Des Weiteren sind ein erster Freilauf 146 und ein zweiter Freilauf 148 vorgesehen, die jeweils in einer Drehrichtung der inneren Mutter 142 relativ zum Gehäuse 140 sperren und in der anderen Drehrichtung lösen, wobei das Sperren und Freigeben der beiden Freiläufe 146 und 148 entgegengesetzt ausgebildet sind.

An den axialen Enden weist die innere Mutter 142 eine umfangseitige Vertiefung 150, 151 auf, während das Gehäuse 140 entsprechende C-förmige Spannringe 152, 153 in einer innenumfangseitigen Nut 154, 155 aufweist. Somit kann die innere Mutter 142 mittels des Spannrings 152 lösbar an einer axialen Position innerhalb des Gehäuses 140 gehalten werden. Diese axiale relative Position kann nur durch eine einen Schwellenwert überschreitende axiale Kraft gelöst werden, die jedoch während eines Presshubs nicht überschritten wird.

Die Fig. 10a und 10b zeigen die Endposition, in der das Gehäuse 140 an der Feder 50 anliegt und in der ein neuer Presshub beginnt. Die Antriebsspindel 26 wird zu einer Drehbewegung angetrieben, so dass die innere Mutter 142, gehalten und gesperrt durch den ersten Freilauf 146 ein axiale Bewegung, in Fig. 10b nach links, ausführt. Dabei zieht die innere Mutter 142 das Gehäuse 140 mittels der Anordnung aus Vertiefung 150, Spannring 152 und Nut 154 in die gleiche axiale Richtung. Der Presshub wird durchgeführt.

Nach Durchlaufen der Pressposition wird die in Fig. 10c gezeigte Position erreicht, in der das Gehäuse 140 in Anlage mit der Feder 52 gelangt. Durch die fortdauernde Drehung der Antriebsspindel 26 wird eine Gegenkraft durch die Feder 52 aufgebaut, wodurch die Schwelle überwunden wird und sich die Verbindung des Spannrings 152 zwischen dem Gehäuse 140 und der inneren Mutter 142 löst. Die innere Mutter 142 steht weiter im Eingriff mit dem ersten Freilauf 146 und verschiebt sich axial relativ zum Gehäuse 140 in Fig. 10c nach links.

Während der fortgesetzten Bewegung gelangt die innere Mutter 142 mit dem zweiten Freilauf 148 in Eingriff, wie in den Fig. 10c und 10d gezeigt ist. Bei der in Fig. 10e erreichten Position gelangt der Spannring 155 in Eingriff mit der Vertiefung 151 und verbindet die innere Mutter 142 erneut lösbar mit dem Gehäuse 140. Aus dieser zweiten Endposition heraus kann durch einen Antrieb der Antriebsspindel in entgegengesetzter Drehrichtung ein weiterer Presshub begonnen werden.

Die axiale Verriegelung der inneren Mutter 142 mit dem Gehäuse 140 ist vorliegend kraftgesteuert über den Spannring entsperrt worden. Es können auch federbelastete Druckstücke eingesetzt werden. Weiterhin sind mechanisch oder elektronisch auslösende Entriegelungsmechanismen vorstellbar, die die Verbindung zwischen innerer Mutter 142 und Gehäuse 140 in der jeweiligen Endlage freigeben.

Die Fig. 11a-e zeigen ein Ausführungsbeispiel mit einem doppelten Freilauf mit einer schiebenden inneren Mutter 142, die innerhalb eines Gehäuses 140 mit den axialen Anschlägen 160 und 162 angeordnet ist. Die Antriebsspindel 26 ist wie beim Ausführungsbeispiel nach Fig. 2 ausgebildet und weist einen mittleren Gewindeabschnitt 62 und zwei daran anschließende gewindelose Zylinderabschnitte 64 und 66 auf.

Wie schon im Zusammenhang mit Fig. 10 dargestellt wurde, ist die innere Mutter 142 innerhalb des Gehäuses 140 mittels mehrerer axial verteilter Lager 144 drehbeweglich angeordnet, wobei eine axiale Bewegung der inneren Mutter 142 relativ zu dem Gehäuse 140 möglich bleibt. Das Innengewinde der inneren Mutter 142 steht dabei mit dem Außengewinde der Antriebsspindel 26 in Eingriff.

Des Weiteren sind ein erster Freilauf 146 und ein zweiter Freilauf 148 vorgesehen, die jeweils in einer Drehrichtung der inneren Mutter 142 relativ zum Gehäuse 140 sperren und in der anderen Drehrichtung lösen, wobei das Sperren und Freigeben der beiden Freiläufe 146 und 148 entgegengesetzt ausgerichtet sind.

In der in den Fig. 11a und 11b gezeigten ersten Endposition steht die innere Mutter 142 nicht im Eingriff mit dem Gewindeabschnitt 62 und befindet sich auf dem Zylinderabschnitt 64. Die Feder 50 drückt das innere Gehäuse 142 in Richtung des Gewindeabschnitts 62. Durch eine Drehung der Antriebsspindel 26 gelangt das Innengewinde der inneren Mutter 142 in Eingriff mit dem Gewindeabschnitt 62, was in Fig. 11c gezeigt ist. In dieser Position ist die innere Mutter 142 in Eingriff mit dem ersten Freilauf, der entgegen der Antriebsrichtung der Antriebsspindel 26 sperrt.

Gleichzeitig erfasst der zweite Freilauf 148 die innere Mutter 142, so dass die innere Mutter 142 durch den Freilauf 148 in Antriebsdrehrichtung sperrt. Somit bewegt sich die innere Mutter 142 weiter in das Gehäuse 140 hinein, bis die innere Mutter 142 in Kontakt mit dem Anschlag 162 kommt. Diese Position ist in Fig. 11d gezeigt.

Bei fortdauernder Drehung der Antriebsspindel 26 drückt die innere Mutter 142 das Gehäuse 140 über den Anschlag 162 in Richtung nach links in den Fig. 11d und 11e und führt somit den Presshub durch. Bei einem vorzeitigen Wechsel der Drehrichtung der Antriebsspindel 26 löst der zweite Freilauf und die innere Mutter 142 dreht mit der Antriebsspindel 26 auf der Stelle, ohne eine Rückwärts- bzw. Öffnungsbewegung zu erzeugen.

In der in Fig. 11e gezeigten zweiten Endposition gelangt das Innengewinde der inneren Mutter 142 außer Eingriff mit dem Gewindeabschnitt 62 und umgreift den Zylinderabschnitt 66. In dieser Position bewirkt eine weitere Drehung der Antriebsspindel 26 keine weitere Bewegung der inneren Mutter 142.

Ausgehend von der zweiten Endposition kann durch eine Drehung der Antriebsspindel 26 in umgekehrter Richtung ein erneuter Presshub durchgeführt werden.

## Patentansprüche

1. Presswerkzeug zum Verpressen von Fittings (4) zur Herstellung von Rohrverbindungen
- mit zwei gegenüberliegenden Pressbacken (6, 8), die jeweils einen Pressabschnitt (10, 12) und einen Hebelabschnitt (14, 16) aufweisen und
- mit einem Halteelement (18) zum verschwenkbaren Verbinden der Pressbacken (6, 8),
- wobei die Pressabschnitte (10, 12) einen Aufnahmebereich (24) ausbilden,
- wobei ein Auseinanderdrücken der Hebelabschnitte (14, 16) ein Schließen des Aufnahmebereichs (24) bewirkt,
- wobei eine Antriebsspindel (26), eine Spindelmutter (28) und mindestens zwei Antriebshebel (30, 32) vorgesehen sind,
- wobei jeder Antriebshebel (30, 32) an einem Ende mit dem Hebelabschnitt (14, 16) einer Pressbacke (6, 8) verschwenkbar verbunden ist und
- wobei jeder Antriebshebel (30, 32) an einem anderen Ende verschwenkbar mit der Spindelmutter (28) verbunden ist,
**dadurch gekennzeichnet,**
- **dass** in einer ersten Endposition der Spindelmutter (28) der Aufnahmebereich (24) offen ist,
- **dass** in einer Pressposition der Spindelmutter (28) der Aufnahmebereich (24) geschlossen ist und
- **dass** in einer zweiten Endposition der Spindelmutter (28) der Aufnahmebereich (24) offen ist.

2. Presswerkzeug nach Anspruch 1,
**dadurch gekennzeichnet,**
**dass** eine Schwenkbewegung der Pressbacken (6,8) eine symmetrische Bewegung der Pressabschnitte (10, 12) bewirkt.

3. Presswerkzeug nach Anspruch 1 oder 2,
**dadurch gekennzeichnet,**
**dass** mindestens ein Federanschlag (50, 52; 54, 56; 58, 60) zur Federung der Bewegung der Spindelmutter (28) in einer Endposition vorgesehen ist.

4. Presswerkzeug nach einem der Ansprüche 1 bis 3,
**dadurch gekennzeichnet,**
- **dass** die Antriebsspindel (26) einen Gewindeabschnitt (62) und zwei sich daran anschließende gewindelose Zylinderabschnitte (64, 66) aufweist und
- **dass** die Spindelmutter (28) bei Erreichen einer Endposition außer Eingriff mit dem Gewindeabschnitt (62) kommt.

5. Presswerkzeug nach einem der Ansprüche 1 bis 4,
**dadurch gekennzeichnet,**
**dass** mindestens ein Federmittel (92, 94) zur Federung der Verbindung der Spindelmutter (28) mit den Antriebshebeln (30, 32) und/oder zur Federung der Verbindung zwischen den Antriebshebeln (30, 32) und den Pressbacken (6, 8) und/oder zwischen der Halterung (18) und den Pressbacken (6, 8) vorgesehen ist.

6. Presswerkzeug nach einem der Ansprüche 1 bis 5,
**dadurch gekennzeichnet,**
**dass** die Antriebshebel (30, 32) gebogen, insbesondere C-förmig ausgebildet sind.

7. Presswerkzeug nach einem der Ansprüche 1 bis 6,
**dadurch gekennzeichnet,**
**dass** die Pressbacken (6, 8) über einen Ratschenmechanismus (100) miteinander verbunden sind.

8. Presswerkzeug nach einem der Ansprüche 1 bis 7,
**dadurch gekennzeichnet,**
- **dass** die Spindelmutter (28) ein Gehäuse (140) und eine innere Mutter (142) aufweist und
- **dass** die Spindelmutter (28) für eine Überholkopplung in zwei Antriebsrichtungen eingerichtet ist.

9. Verfahren zum Verpressen von Fittings zur Herstellung von Rohrverbindungen,
- bei dem ein Presswerkzeug mit zwei einen Aufnahmebereich bildenden Pressbacken nach einem der Ansprüche 1 bis 8, eingesetzt wird und
- bei dem durch Anwendung eines Drehmoments das Presswerkzeug von einer ersten Endposition über eine Pressposition zu einer zweiten Endposition verfahren wird,
- wobei in der ersten Endposition und in der zweiten Endposition der Aufnahmebereich offen ist und
- wobei in der Pressposition der Aufnahmebereich geschlossen ist.

10. Verfahren nach Anspruch 9,
- bei dem das Presswerkzeug abwechselnd in zwei Antriebsrichtungen durch entgegengesetzte Drehmomente angetrieben wird und
- bei dem nach jedem Wechsel der Antriebsrichtung ein Verpressen eines Fittings durchgeführt wird..

11. Verfahren nach einem der Ansprüche 9 oder 10,
bei dem die Pressbacken in der ersten Endposition und in der zweiten Endposition gefedert werden.

12. Verfahren nach einem der Ansprüche 9 bis 11,
bei dem die Spindelmutter bei Erreichen einer Endposition außer Eingriff mit dem Gewinde der Antriebsspindel gebracht wird.

13. Verfahren nach einem der Ansprüche 9 bis 12,
bei dem die Fertigungstoleranz einer Rohrverbindung durch Federung einer Verbindung und/oder durch die Formgebung der Antriebshebel ausgeglichen wird, wobei die Verbindung eine Verbindung zwischen den Pressbacken, eine Verbindung zwischen einem Antriebshebel und einem Hebelabschnitt und/oder eine Verbindung zwischen einem Antriebshebel und der Spindelmutter ist.

14. Verfahren nach einem der Ansprüche 9 bis 13,
bei dem eine Zwischenposition, die beim Verfahren des Presswerkzeugs zwischen den beiden Endpositionen erreicht wird, durch einen Ratschenmechanismus gehalten wird.

15. Verfahren nach einem der Ansprüche 9 bis 14,
bei dem eine vollständige Verpressung einer Rohrverbindung durch Einsatz einer doppelten Überholkupplung erreicht wird.

## Claims

1. Pressing tool for pressing fittings (4) for the production of pipe connections
- with two opposing pressing jaws (6, 8) which each have a pressing section (10, 12) and a lever section (14, 16), and
- with a retaining element (18) for swivel connecting the pressing jaws (6, 8),
- wherein the pressing sections (10, 12) form a receiving section (24),
- wherein pressing apart the lever sections (14, 16) causes the receiving section (24) to close,
- wherein an actuator spindle (26), a spindle nut (28) and at least two actuator levers (30, 32) are provided,
- wherein each actuator lever (30, 32) is swivel connected at one end to the lever section (14, 16) of a pressing jaw (6, 8), and
- wherein each actuator lever (30, 32) is swivel connected at another end to the spindle nut (28),
**characterized in that,**
- in a first end position of the spindle nut (28) the receiving section (24) is open,
- in a press position of the spindle nut (28) the receiving section (24) is closed, and
- in a second end position of the spindle nut (28) the receiving section (24) is open.

2. Pressing tool according to claim 1,
**characterized in that**,
a swiveling movement of the pressing jaws (6, 8) effects a symmetrical movement of the pressing sections (10, 12).

3. Pressing tool according to claim 1 or 2,
**characterized in that**,
at least one spring stop (50, 52; 54, 56; 58, 60) is provided for the suspension of the movement of the spindle nut (28) in an end position.

4. Pressing tool according to any one of claims 1 to 3,
**characterized in that**,
- the actuator spindle (26) has a threaded section (62) and two subsequently attached threadless cylinder sections (64, 66) and
- the spindle nut (28) is disengaged from the thread section (62) when reaching an end position.

5. Pressing tool according to any one of claims 1 to 4,
**characterized in that**,
at least one spring means (92, 94) is provided for the suspension of the connection of the spindle nut (28) to the actuator levers (30, 32) and/or for the suspension of the connection between the actuator levers (30, 32) and the pressing jaws (6, 8) and/or between the holder (18) and the pressing jaws (6, 8).

6. Pressing tool according to any one of claims 1 to 5,
**characterized in that**,
the actuator levers (30, 32) are bent, in particular C-shaped.

7. Pressing tool according to any one of claims 1 to 6,
**characterized in that**,
the pressing jaws (6, 8) are connected to one another via a ratchet mechanism (100).

8. Pressing tool according to any one of claims 1 to 7,
**characterized in that**,
- the spindle nut (28) comprises a housing (140) and an inner nut (142) and
- the spindle nut (28) is set up for an overrunning clutch in two actuation directions.

9. Method for pressing fittings for producing pipe connections,
- in which a pressing tool according to any one of claims 1 to 8 with two pressing jaws forming a receiving section is used, and
- in which the pressing tool is moved from a first end position via a press position to a second end position by applying a torque,
- wherein in the first end position and in the second end position the receiving section is open, and
- wherein in the press position the receiving section is closed .

10. Method according to claim 9,
- in which the pressing tool is actuated alternately in two actuator actuation directions by opposite torques, and
- in which after each change of the actuation direction a pressing of a fitting is performed.

11. Method according to claim 9 or 10,
in which the pressing jaws are suspended in the first end position and in the second end position.

12. Method according to any one of claims 9 to 11,
in which the spindle nut is disengaged from the thread of the actuator spindle when reaching an end position.

13. Method according to any one of claims 9 to 12,
in which the production tolerance of a pipe connection is compensated by suspension of a connection and/or by shaping the actuator levers, wherein the connection is a connection between the pressing jaws, a connection between an actuator lever and a lever section and/or a connection between an actuator lever and the spindle nut.

14. Method according to any one of claims 9 to 13,
in which an intermediate position, which is reached between the two end positions when the pressing tool is moved, is held by a ratchet mechanism.

15. Method according to any one of claims 9 to 14,
in which a complete pressing of a pipe connection is achieved by using a double overrunning clutch.

## Revendications

1. Outil de pressage pour presser des raccords (4) afin de réaliser des liaisons de tuyaux,
- avec deux mâchoires de pressage disposées de façon opposé l'une à l'autre (6, 8), dont chacune présente une section de pressage (10, 12) et une section de levier (14, 16), et
- avec un élément de retenue (18) pour relier de manière pivotante les mâchoires de pressage (6, 8)
- où les sections de pressage (10, 12) forment une zone de réception (24),
- où un écartement des sections de levier (14,16) provoque la fermeture de la zone de réception (24),
- où une broche d'entraînement (26), un écrou de broche (28) et au moins deux leviers d'entraînement (30, 32) sont prévus,
- où chaque levier d'entraînement (30, 32) est relié à une extrémité de manière pivotante à la section de levier (14, 16) d'une mâchoire de pressage (6, 8), et
- où chaque levier d'entraînement (30, 32) est relié de manière pivotante à une autre extrémité à l'écrou de broche (28),
**caractérisé**
- **en ce que** dans une première position extrême de l'écrou de broche (28), la zone de réception (24) est ouverte,
- **en ce que** dans une position de pressage de l'écrou de broche (28), la zone de réception (24) est fermée, et
- **en ce que** dans une deuxième position extrême de l'écrou de broche (28), la zone de réception (24) est ouverte.

2. Outil de pressage selon la revendication 1,
**caractérisé en ce qu'**un mouvement de pivotement des mâchoires de pressage (6, 8) entraîne un mouvement symétrique des sections de pression (10, 12).

3. Outil de pressage selon la revendication 1 ou 2,
**caractérisé en ce qu'**au moins une butée à ressort (50, 52 ; 54, 56 ; 58, 60) est prévue pour amortir le mouvement de l'écrou de broche (28) dans une position extrême

4. Outil de pressage selon l'une des revendications 1 à 3,
**caractérisé**
- **en ce que** la broche d'entraînement (26) présente une section filetée (62) et deux sections cylindriques non filetées (64, 66) qui s'y raccordent, et
- **en ce que** l'écrou de broche (28) se désengage de la section filetée (62) lorsqu'une position extrême est atteinte.

5. Outil de pressage selon l'une des revendications 1 à 4,
**caractérisé en ce qu'**au moins un moyen de suspension (92, 94) est prévu pour la suspension de la liaison de l'écrou de broche (28) avec les leviers d'entraînement (30, 32) et/ou pour la suspension de la liaison entre les leviers d'entraînement (30, 32) et les mâchoires de pressage (6, 8) et/ou entre l'élément de retenue (18) et les mâchoires de pressage (6, 8).

6. Outil de pressage selon l'une des revendications 1 à 5,
**caractérisé en ce que** les leviers d'entraînement (30, 32) sont incurvés, en particulier en forme de C.

7. Outil de pressage selon l'une des revendications 1 à 6,
**caractérisé en ce que** les mâchoires de pressage (6, 8) sont reliées entre elles par un mécanisme à cliquet (100).

8. Outil de pressage selon l'une quelconque des revendications 1 à 7,
**caractérisé**
- **en ce que** l'écrou de broche (28) comprend un boîtier (140) et un écrou intérieur (142), et
- **en ce que** l'écrou de broche (28) est disposé pour un accouplement à roue libre dans deux directions d'entraînement.

9. Procédé de pressage de raccords pour la réalisation de liaisons de tuyaux,
- dans lequel un outil de pressage avec deux mâchoires de pressage formant une zone de réception selon l'une des revendications 1 à 8 est utilisé, et
- dans lequel l'outil de pressage est déplacé par application d'un couple de rotation d'une première position extrême à une deuxième position extrême en passant par une position de pressage,
- où la zone de réception est ouverte dans la première position extrême et dans la deuxième position extrême, et
- où la zone de réception est fermée dans la position de pressage.

10. Procédé selon la revendication 9,
- dans lequel l'outil de pressage est entraîné alternativement dans deux directions d'entraînement par des couples opposés et
- dans lequel le pressage d'un raccord est effectué après chaque changement de direction d'entraînement.

11. Procédé selon l'une quelconque des revendications 9 ou 10,
- dans lequel les mâchoires de pressage sont maintenues en suspension dans la première position d'extrémité et dans la deuxième position d'extrémité.

12. Procédé selon l'une quelconque des revendications 9 à 11,
- dans lequel l'écrou de broche est désengagé du filetage de la tige d'entraînement lorsqu'il atteint une position extrême.

13. Procédé selon l'une quelconque des revendications 9 à 12,
- dans lequel la tolérance de fabrication d'une liaison de tuyau est compensée par la suspension d'une liaison et/ou par la forme des leviers d'entraînement, la liaison étant une liaison entre les mâchoires de pressage, une liaison entre un levier d'entraînement et une section de levier et/ou une liaison entre un levier d'entraînement et l'écrou de broche.

14. Procédé selon l'une quelconque des revendications 9 à 13,
- dans lequel une position intermédiaire atteinte lors du déplacement de l'outil de pressage entre les deux positions extrêmes est maintenue par un mécanisme à cliquet.

15. Procédé selon l'une quelconque des revendications 9 à 14,
- dans lequel le pressage complet d'une liaison de tuyau est obtenu en utilisant un double accouplement à roue libre.
